# EUROPÄISCHE PATENTSCHRIFT

(11) **EP 0 819 922 B1**
(45) Veröffentlichungstag und Bekanntmachung des Hinweises auf die Patenterteilung: **13.03.2002**
(21) Anmeldenummer: 97110270.2
(22) Anmeldetag: 24.06.1997
(51) Int. Cl.: G01G 23/00, G01L 1/22, G01L 1/26

(54) **Schocksicherung für eine Kraftmessvorrichtung**
Shock protection for a force measuring device
Protection de chocs pour un dispositif de mesure de force

(30) Priorität: 19.07.1996 CH 181496; 21.02.1997 CH 41397
(43) Veröffentlichungstag der Anmeldung: 21.01.1998
(73) Patentinhaber: Mettler-Toledo GmbH, 8606 Greifensee (CH)
(72) Erfinder: Burkhard, Hans-Rudolf, 8493 Wila (CH); Schneider, Ferdinand, 8400 Winterthur (CH); Tschopp, Ernst, 8637 Laupen (CH)

(56) Entgegenhaltungen:
- EP-A- 0 076 616
- DE-A- 4 305 426
- DE-U- 9 401 459
- US-A- 3 646 809
- US-A- 4 734 671

## Beschreibung

Die Erfindung betrifft eine Schocksicherung für eine Kraftmessvorrichtung, insbesondere für eine Waage, umfassend einen Materialblock mit einem feststehenden Parallelogrammschenkel, einem zur Aufnahme der zu messenden Kraft dienenden, auslenkbaren Parallelogrammschenkel, zwei in der Parallelogrammebene biegeelastischen, die beiden Parallelogrammschenkel verbindenden Lenkern und wenigstens einem Hebel, der über eine Koppel mit dem auslenkbaren Parallelogrammschenkel verbunden ist.

Es sind Überlastschutzvorrichtungen für Waagen bekannt (siehe z.B. US-A-4 734 671 oder EP-A-0 076 616). Diese dienen üblicherweise dazu, eine Beschädigung der Messzelle zu verhindern, wenn eine zu grosse Last auf die Waagschale aufgelegt wird oder wenn die Last durch unsorgfältiges Handling senkrecht auf die Waagschale fällt. Die meisten bekannten Überlastschutzvorrichtungen sind als Anschläge ausgebildet, welche den vertikalen Weg des Lastaufnehmers begrenzen, damit keine über die berechneten Kräfte hinausgehenden in die Messzelle eingeleitet werden können. Diese Vorrichtungen weisen einen im allgemeinen sehr einfachen Aufbau auf und erfüllen ihre Aufgabe einwandfrei.

Waagen können aber nicht nur beim Wägen beschädigt werden, sondern auch auf dem Transport vom Hersteller zum Käufer und allenfalls auch beim Transport und bei der Reinigung innerhalb der Räumlichkeiten des Anwenders. Die Waage schädigende Kräfte treten dann allerdings nicht ausschliesslich in vertikaler Richtung auf die Kraftmessvorrichtung auf, sondern auch aus allen möglichen zur Vertikalen geneigten Richtungen. Um hohe Beschleunigungswerte beim Versand auf die Kraftmessvorrichtung zu vermeiden, werden Waagen in aufwendiger und folglich auch kostspieliger Weise in schockdämpfende Materialien verpackt. Solche Verpackungen sind sehr voluminös und benötigen daher, insbesondere bei weltweitem Versand, ein grosses und damit auch teures Transportvolumen. Dennoch bieten sie nur einen beschränkten Schutz.

Es ist auch möglich, empfindliche Teile der Waage vor dem Versand zu verschrauben. Dies bedingt aber einen zusätzlichen Arbeitsaufwand beim Hersteller, und die Waage kann beim Anwender und Käufer erst in Betrieb genommen werden, wenn diese Transportverschraubung oder Transportsicherung gelöst oder entfernt worden ist. Dies bedeutet aber bereits einen Eingriff in die werkseitig justierte Waage und zugleich einen unerwünschten Zeitaufwand bei der Inbetriebnahme.

In modernen Kraftmesseinrichtungen, wie sie beispielsweise in der DE-A1-4305426 beschrieben sind, sind die Parallelogrammschenkel, die Lenker und die Koppel oft aus einem einstückigen Materialblock gefertigt. Die Biegestellen, welche die einzelnen Elemente miteinander verbinden, weisen eine Dicke auf, die nur wenige Hundertstelmillimeter bis einige Zehntelmillimeter betragen. Der Schutz dieser präzisen Elemente gegen Schockeinwirkung ist folglich äusserst wichtig.

Die Aufgabe der Erfindung ist die Schaffung einer Schocksicherung für die Kraftmessvorrichtung, welche die Biegestellen innerhalb des Materialblockes nicht nur während des Transportes, sondern permanent auch während des Gebrauchs und des Handlings der Waage vor den Auswirkungen von Schlägen schützt.

Gelöst wird diese Aufgabe durch eine Schocksicherung für eine Kraftmessvorrichtung, insbesondere für eine Waage, umfassend einen Materialblock mit einem feststehenden Parallelogrammschenkel, einem zur Aufnahme der zu messenden Kraft dienenden, auslenkbaren Parallelogrammschenkel, zwei in der Parallelogrammebene biegeelastischen, die beiden Parallelogrammschenkel verbindenden Lenkern und wenigstens einem Hebel, der über eine Koppel mit dem auslenkbaren Parallelogrammschenkel verbunden ist, wobei ein Sicherungsbolzen in einer die Kraftmessvorrichtung parallel zur Einleitung einer zu messenden Kraft mindestens teilweise durchdringenden Bohrung eingesetzt und an einem der die Kraftmessvorrichtung bildenden Teile des Materialblocks spielfrei verbunden ist und bezüglich der übrigen durchdrungenen Teile ein radiales Spiel aufweist.

Die permanent eingesetzte Schocksicherung schützt die Kraftmessvorrichtung nicht nur während des Transports und des Gebrauchs, sondern sie kann bereits werkseitig eingebaut werden, bevor die Waage die Qualitäts- und Endkontrollen sowie die Justierung durchläuft. Die Schocksicherung kann stets eingesetzt bleiben; eine Vorbereitung der Waage für den Transport und später entsprechende Massnahmen für die Inbetriebnahme sind nicht nötig. Damit entfällt auch ein Eingriff in die Mechanik der Waage durch nicht ausgebildete Personen. Die Bohrung im Materialblock, welche den Sicherungsbolzen aufnimmt, kann kostengünstig und äusserts präzise schon vor der Bearbeitung des Materialblocks, d.h. beispielsweise vor dem Erodieren der Lenker, Hebel und Koppel erfolgen. Dadurch wird gewährleistet, dass die nach der Bearbeitung vorliegenden, durch Freiräume beabstandeten Bohrungsabschnitte hundertprozentig fluchten und das vorgegebene Spiel zwischen dem Sicherungsbolzen und der Wandung der Bohrungsabschnitte genau definiert und massgetreu eingehalten werden kann. Die Schocksicherung kann an Kraftmessvorrichtungen mit einem oder mehreren Hebeln eingesetzt werden. Es kann mit einem einzigen Sicherungsbolzen gearbeitet werden, der mehrere Hebel durchdringt, oder es können mehrere Sicherungsbolzen eingesetzt werden, welche jeweils einzelne Hebel und/oder Lenker durchdringen und die entsprechenden Biegestellen schützen.

Zur axialen Festlegung der Position des Sicherheitsbolzens kann auch ein Querbolzen vorgesehen sein. Die Erzeugung der für die Lagerung des Sicherungsbolzens und des Querbolzens notwendigen Bohrungen ist sehr einfach, da deren Durchmesser über die gesamte Länge der Bohrungen konstant ist. In der einfachsten Ausgestaltung der Erfindung können die beiden Bohrungen den Materialblock vollständig durchdringen. Auch an die Genauigkeit der Abstände der Achsen der beiden Bohrungen werden verhältnismässig geringe Ansprüche gestellt. Der Querbolzen kann entweder in die Querbohrung eingepresst oder eingeklebt werden. Der Sicherungsbolzen wird von Hand in die dazu vorgesehene Bohrung eingeschoben und danach mit einem Drehmomentschlüssel um ca. 45° - 90° gedreht. Eine weitere Sicherungsmassnahme oder nachträgliche Einstellmessungen sind nicht notwendig. Auch die Herstellung der beiden Bolzen ist einfach; der Querbolzen ist über seine gesamte Länge zylindrisch; der Sicherungsbolzen besteht aus einem Drehteil, wobei ein Endbereich durch eine partielle Fräsung abgeplattet ist.

Die Erfindung wird im folgenden durch illustrierte Ausführungsbeispiele näher erläutert. Es zeigen:
- Figur 1: eine perspektivische Ansicht eines einstückigen Materialblocks einer Kraftmessvorrichtung (Messwandler weggelassen),
- Figur 2: einen Längsschnitt durch den Materialblock im Bereich des Sicherungbolzens längs Linie II-II in Figur 1,
- Figur 3: einen schematischen Längsschnitt durch den Materialblock längs Linie II-II in Figur 1 und
- Figur 4: eine perspektivische Ansicht eines Materialblocks mit nur einem Hebel
- Figur 5: eine perspektivische Ansicht eines einstückigen Materialblocks einer weiteren Ausgestaltung einer Kraftmessvorrichtung,
- Figur 6: einen Längsschnitt durch den Materialblock im Bereich des Sicherungbolzens längs Linie VI-VI in Figur 5, Sicherungsbolzen lose,
- Figur 7: einen Längsschnitt durch den Materialblock im Bereich des Sicherungbolzens längs Linie VI-VI in Figur 5, Sicherungsbolzen gespannt,
- Figur 8: eine perspektivische Ansicht des Sicherungsbolzens,
- Figur 9: eine Seitenansicht des Sicherungsbolzens in Figur 8,
- Figur 10: eine Aufsicht auf den Sicherungsbolzen in Figur 8,
- Figur 11: einen Querschnitt durch den Bolzen längs Linie XI-XI in Figur 9.

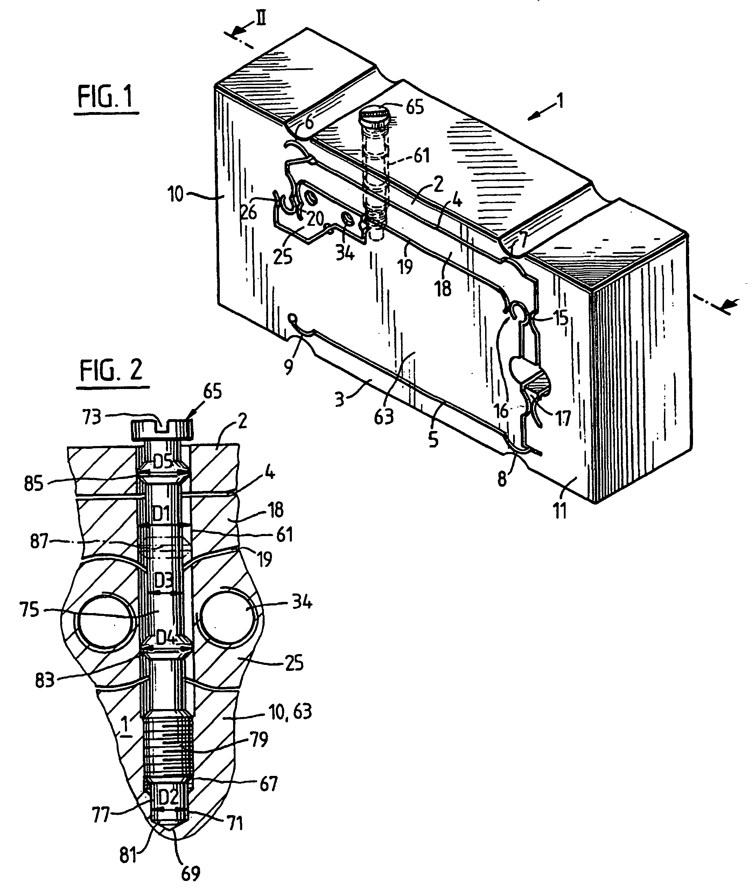

Von einer Waage ist in Figur 1 nur ein einstückiger Materialblock 1 dargestellt, in welchem durch materialfreie Bereiche eine Parallelführung ausgebildet ist. Die materialfreien Bereiche sind durch Funkenerosion erzeugt worden und bilden die Begrenzungslinien zwischen den Elementen der Parallelogrammführung. Mit den Bezugszeichen 2 und 3 sind parallel zur oben liegenden Fläche und zur unten liegenden Fläche des quaderförmigen Materialblockes 1 ein oberer und ein unterer Lenker bezeichnet Die beiden Lenker 2 und 3 sind durch Biegestellen 6, 7, 8 und 9 mit den Parallelogrammschenkeln 10 und 11 verbunden. Der Parallelogrammschenkel 10 ist feststehend, der Parallelogrammschenkel 11 ist von den Lenkern 2, 3 parallel auslenkbar geführt. Die materialfreien Bereiche 4 und 5, welche die Lenker 2 und 3 vom übrigen Material des Materialblocks 1 trennen, sind im Bereich der Biegestellen 6, 7, 8 und 9 bis nahe an die Oberfläche des Materialblocks 1, der dort in die beiden Oberflächen eingelassene bogenförmige Rinnen aufweist, herangeführt. Die Materialstärke in den Bereichen der Biegestellen 6-9 liegt im Bereich von wenigen Zehntelmillimetern.

Der materialfreie Bereich 4 und ein weiterer materialfreier Bereich 19 bilden innerhalb des Materialblocks 1 einen ersten Hebel 18. Dieser ist auf der rechten Seite durch eine Koppel 17 mit dem auslenkbaren Parallelogrammschenkel 11 verbunden. Auf der anderen Seite ist er unter Zwischenschaltung einer Biegestelle 20 mit einem zweiten Hebel 25 verbunden. Der zweite Hebel 25 ist durch eine Biegestelle 26 mit dem feststehenden Parallelogrammschenkel 10 verbunden. Die geometrische Gestalt der beiden Hebel 18 und 25 sowie die Anordnung der die Hebel und Lenker bzw. Parallelogrammschenkel verbindenden Biegestellen werden bestimmt durch die Anforderungen, die an die Messzelle gestellt werden. Alternativ können auch mehr oder weniger als zwei Hebel im Materialblock 1 ausgebildet sein.

Im zweiten Hebel 25 sind zwei Bohrungen 34 für die Befestigung von nicht dargestellten Trägern angebracht, an deren Enden Teile eines elektromagnetischen Messwandlers befestigt werden können.

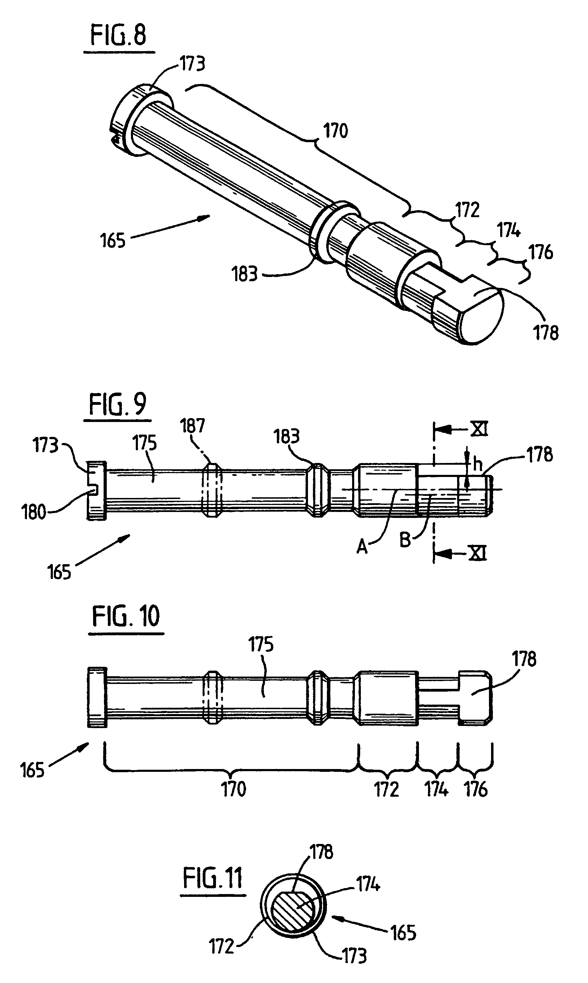

Im Bereich des Materialblocks 1, in dem die beiden Lenker 2 und 3 sowie die beiden Hebel 18 und 25 übereinander liegen, ist eine Bohrung 61 angebracht, welche sich von der oberen Fläche des Materialblocks 1 senkrecht durch diese hindurch in den feststehenden Parallelogrammschenkel 10, d.h. in den zwischen die beiden Lenker 2 und 3 ragenden Abschnitt 63 des Parallelogrammschenkels 10 erstreckt In der Bohrung 61 sitzt ein Sicherungsbolzen 65, dessen Ausbildung und Funktion anhand der Figur 2 und der Figuren 6 bis 9 näher erläutert werden wird.

Die Bohrung 61 weist im oberen Lenker 2, im ersten Hebel 18, im zweiten Hebel 25 und mindestens in einem Abschnitt des Teils 63 des Parallelogrammschenkels 10 einen Durchmesser D₁ auf. Es könnten auch Stufenbohrungen mit unterschiedlichen Durchmessern in den einzelnen Elementen des Materialblocks vorgesehen sein. Im Endbereich der Bohrung 61 schliesst ein Gewindeabschnitt 67 an, welcher unten in eine zylindrische Bohrung 71 von geringerem Durchmesser D₂ übergeht. Die beiden koaxialen Bohrungen 61 und 71 weisen enge Masstoleranzen auf. Alternativ kann die Bohrung 71 in einem konischen Abschnitt 69 enden, der zur Zentrierung des Sicherungsbolzens 65 dient. In diesem Fall ist keine enge Toleranz in der Bohrung 71 notwendig.

Am Sicherungsbolzen 65 sitzt oben ein Schraubenkopf 73. Der Schaft 75 des Sicherungsbolzens 65 weist einen Durchmesser D₃ auf, der wesentlich kleiner ist als der Durchmesser D₁ der Bohrung 61. Das untere Ende 77 des Sicherungsbolzens 65, welches sich im engeren Bohrungsabschnitt 71 befindet, ist gewindelos und weist einen Durchmesser auf, der nur wenig kleiner ist als die Bohrung 71. Oberhalb des Abschnittes 71 ist im Schaft 75 ein Gewinde 79 ausgebildet, welches der Gewindebohrung 67 entspricht. Das untere Ende 81 des Schaftes 75 ist angeschrägt oder abgerundet ausgebildet.

Im Durchdringungsbereich des zweiten Hebels 25 ist am Schaft 75 eine erste umlaufende Schulter 83 ausgebildet, deren Aussendurchmesser D₄ kleiner ist als der Durchmesser D₁ der Bohrung 61. Das Spiel der ersten Schulter 83 in der Bohrung 61 ist sehr klein und liegt im Bereich von beispielsweise 0,1mm.
Eine zweite umlaufende Schulter 85 ist im Bereich der Durchdringung des oberen Lenkers 2 ausgebildet. Der Durchmesser D₅ der Schulter 85 ist ebenfalls kleiner als der Durchmesser D₁ der Bohrung 61, jedoch ist die Durchmesserdifferenz grösser als bei der Schulter 83 im Bereich des zweiten Hebels 25.

Zusätzlich zu den beiden dargestellten Schultern 83 und 85 kann eine dritte Schulter 87 mit Spiel zur Bohrung 61 im Bereich der Durchdringung der Bohrung 61 durch den ersten Hebel 18 liegen, falls dieser ebenfalls geschützt werden soll.

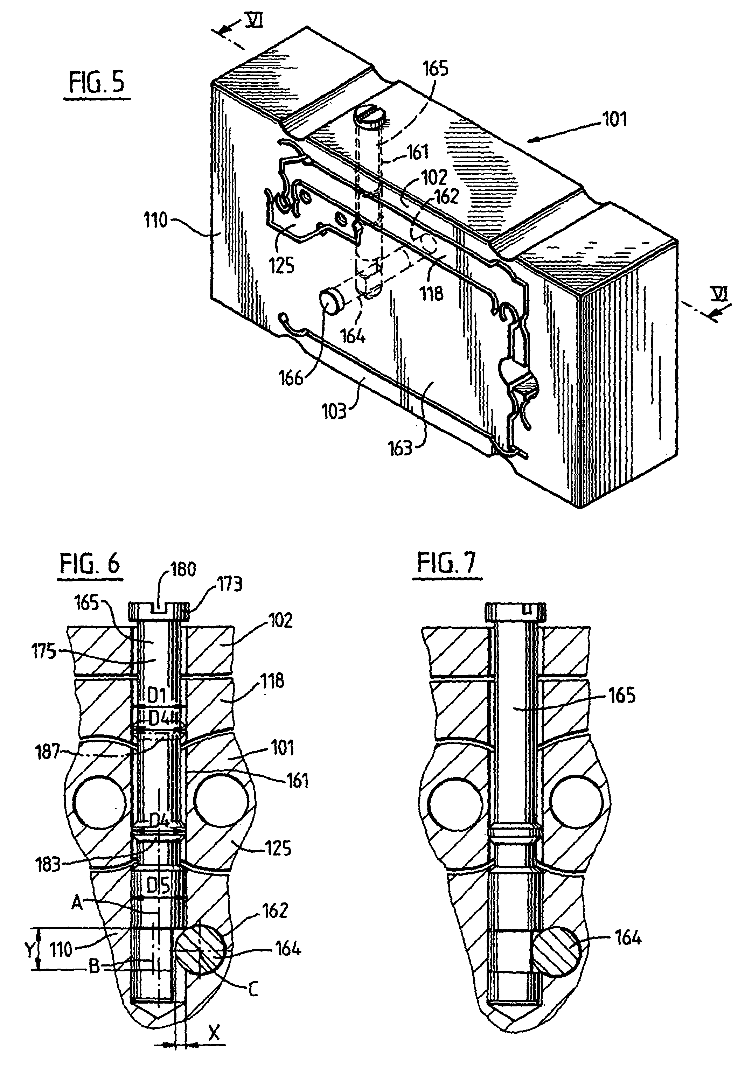

Die beiden Parallelogrammschenkel 10,11 und die beiden Lenker 2,3 können auch als separate Teile gefertigt sein, in welche die Hebel 18,25 sowie deren Verbindungen eingesetzt sind.
Im weiteren Ausführungsbeispiel gemäss den Figuren 5 bis 11 ist im Bereich des Materialblocks 101, in dem die beiden Lenker 102 und 103 sowie die beiden Hebel 118 und 125 übereinander liegen, eine Bohrung 161 angebracht, welche sich von der oberen Fläche des Materialblocks 101 senkrecht durch diese hindurch in den feststehenden Parallelogrammschenkel 110, d.h. in den zwischen die beiden Lenker 102 und 103 ragenden Abschnitt 163 des Parallelogrammschenkels 110 erstreckt. In der Bohrung 161 sitzt ein Sicherungsbolzen 165, dessen Ausbildung und Funktion anhand den Figuren 6 bis 11 näher erläutert werden wird. Die Bohrung 161 weist im oberen Lenker 102, im ersten Hebel 118, im zweiten Hebel 125 und mindestens in einem Abschnitt des Teils 163 des Parallelogrammschenkels 110 einen Durchmesser D₁ auf. Die Bohrung 161 kann sich durch den gesamten Materialblock 101 erstrecken und stets den gleichen Durchmesser D₁ aufweisen. Die aus koaxial liegenden Abschnitten bestehende Bohrung 161 ist mit engen Masstoleranzen hergestellt.Im Parallelogrammschenkel 110 ist eine senkrecht zur Bohrung 161 liegende Querbohrung 162 ausgebildet, die sich durch den Parallelogrammschenkel 110 hindurch erstrecken kann. Die Querbohrung 162 dient der Aufnahme eines zylindrischen Querstiftes 164, an dessen einem Ende ein Kopf 166 ausgebildet sein kann. Der Durchmesser des Querstiftes 164 ist entweder derart bemessen, dass er nach dem Einschieben
in die Querbohrung 162 festsitzt, oder er wird in die Querbohrung 162 eingeklebt.
Die Querbohrung 162 durchdringt die Bohrung 161, wobei die Überschneidung X in der Grössenordnung von ca. 20 bis 30 Prozent von D₁ liegt.

Der zylindrische Schaft 175 des Sicherungsbolzens 165 umfasst vier an den Kopf 173 anschliessende Abschnitte. Der erste zylindrische Abschnitt 170 trägt, analog zum ersten Ausführungsbeispiel, mindestens eine umlaufende Schulter 183. Der zweite Abschnitt 172 ist ebenfalls zylindrisch, jedoch mit grösserem Durchmesser D₅, der dritte Abschnitt 174 weist einen kreisrunden oder elliptischen Querschnitt auf, dessen Zentrum oder Achse B versetzt zur Achse A des Sicherungsbolzens 165 liegt. Der vierte, das Ende bildende Abschnitt 176 ist ebenfalls zylindrisch, doch ist mindestens an einer Stelle eine Abplattung 178 mit einer Abschnittshöhe h angebracht, die parallel zur Achse A liegt. Die Höhe h des durch die Abplattung 178 abgeschnittenen Zylinderabschnittes entspricht mindestens dem Betrag der Überschneidung X. Der dritte Abschnitt 174 liegt im Bereich der Überschneidung X.

Die Abplattung 178 erstreckt sich auch über den dritten Abschnitt 174, falls der elliptische Querschnitt oder der kreisrunde Querschnitt, dessen Achse B versetzt zur Achse A liegt, radial über die Abplattung im vierten Abschnitt 176 ragen würde.

Im Durchdringungsbereich des zweiten Hebels 125 liegt die am Schaft 175 des Sicherungsbolzens 165 ausgebildete erste umlaufende Schulter 183, deren Aussendurchmesser D₄ kleiner ist als der Durchmesser D₁ der Bohrung 161. Das Spiel der ersten Schulter 183 in der Bohrung 161 ist sehr klein und liegt im Bereich von beispielsweise 0,1mm.

Zusätzlich zu der dargestellten Schulter 183 kann eine zweite Schulter 187 mit Spiel zur Bohrung 161 im Bereich der Durchdringung der Bohrung 161 durch den ersten Hebel 118 liegen, falls dieser ebenfalls geschützt werden soll.

Wirkt auf die Kraftmessvorrichtung eine über das Normale hinausgehende, nicht vertikale Kraft und/oder eine Beschleunigung, d.h. eine Schockbelastung, sei es durch eine zu schnell oder zu grosse schräg aufgelegte Last, eine auf die Waagschale fallende Last oder Schläge beim Transport, welche aus irgendeiner Richtung einwirken, so weichen einzelne oder mehrere Teile der Kraftmessvorrichtung, d.h. Teile des Materialblockes, infolge Massenträgheit seitlich aus. Das Ausweichen wird durch den Sicherungsbolzen 65,165 in all denjenigen Richtungen eingeschränkt, in denen eine Beschädigung oder Zerstörung von Teilen des Materialblocks 1 möglich ist, insbesondere der sehr feinen und empfindlichen Biegestellen 15, 16, welche die Koppel 17 mit den Lenkern 2,3 und dem auslenkbaren Parallelogrammschenkel 11 verbinden. Es werden auch die Biegestellen 20 und 26, welche den zweiten Hebel 25 mit dem feststehenden Parallelogrammschenkel 10 und dem ersten Hebel 18 verbinden, geschützt. Die unter der Krafteinwirkung ausweichenden Teile gelangen nach einer sehr kurzen Wegstrecke im Bereich von Hundertstelsmillimetern in Anlage mit der dem jeweiligen Teil zugeordneten Schulter auf dem Bolzen 65. Der Sicherungsbolzen 65 im ersten Ausführungsbeispiel, der nur an seinem einen Ende fest mit dem Materialblock 1 verbunden ist, wird selbst durch die zuoberst liegende Schulter 85 innerhalb des Materialblocks 1 radial abgestützt. Das Spiel der Schulter 85 innerhalb der Bohrung 61 ist derart klein bemessen, dass nur eine minimale Durchbiegung um den Betrag des Spiels erfolgt. Die seitliche Verschiebung des Sicherungsbolzens 65 bezüglich des Materialblocks 1 ist derart bemessen, dass eine Beschädigung der ausgelenkten Teile der Messzelle ausgeschlossen ist. Das Spiel zwischen den Schultern auf dem Schaft 75 des Sicherungsbolzens 65 ist hingegen gross genug, um die Bewegung der einzelnen Teile (oberer Lenker 2, erster und zweiter Hebel 18 und 25) während eines Wägevorganges nicht zu beeinflussen. Eine Demontage des Sicherungsbolzens 65 für die Inbetriebnahme der Waage und deren Gebrauch ist folglich nicht nötig.

Im Ausführungsbeispiel mit den vier Abschnitten 170 bis 176 wird der Sicherungsbolzen 165 im Bereich des zweiten bis vierten Abschnittes 172 bis 176 im Teil 163 festgehalten. Die Verbindung zwischen dem Teil 163 und dem Sicherungsbolzen 165 wird im folgenden näher beschrieben. In die Querbohrung 162 des Materialblocks 101 wird der Querbolzen 164 eingepresst oder eingeklebt. Seine Mantelfläche ragt dann im Bereich Y (Fig.6) in den Querschnitt der Bohrung 161 für die Sicherungsbolzen 165 hinein. Nun wird der Sicherungsbolzen 165 in die Bohrung 161 eingeführt, wobei darauf geachtet werden muss, dass die Abplattung 178 an den Abschnitten 174 und 176 parallel zur Achse C des Querbolzens 164 liegt. Der Sicherungsbolzen 165 kann auf diese Weise am Querbolzen 164 vorbeigeführt werden. Der vierte Abschnitt 176 kommt danach unterhalb des Bereiches Y zu liegen. Der vollständig eingeführte Sicherungsbolzen 165 steckt nun, je nach Passgenauigkeit, bereits sehr exakt geführt und gehalten im Bereich 163 fest. Um diese Lage unverrückbar festzulegen wird mit Hilfe eines Werkzeuges, z.B. mit einem Schraubendreher, der in einen Schlitz 180 im Schraubenkopf 173 eingreift, der Sicherungsbolzen 165 um 45° bis 90° gedreht. Durch diese Drehung gelangt die Mantelfläche des dritten exzentrischen Abschnittes 174 in Anlage mit dem Querbolzen 164. Die daraus resultierende, quer zur Achse A verlaufende Kraft presst den Sicherungsbolzen 165 mit den Mantelflächen des zweiten und vierten Abschnittes 172 und 176 an die Wandung der Bohrung 161. Der Sicherungsbolzen 165 ist nun sehr präzise zur Längsachse A der Bohrung 161 ausgerichtet und wird festgehalten.
Alternativ könnten die Abschnitte 174 und 176 den gleichen Durchmesser wie Abschnitt 172 aufweisen und zylindrisch ausgebildet sein, wenn der Querstift 164 einen exzentrischen Abschnitt aufweisen würde (keine Abbildung).

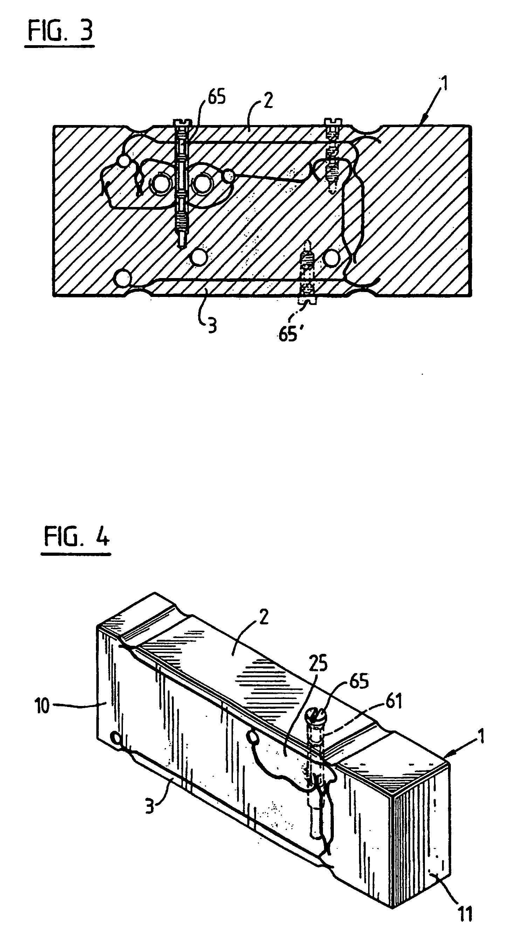

In den Ausführungsbeispielen gemäss den Figuren 1 und 2 sind Kraftmessvorrichtungen mit zwei Hebeln beschrieben worden. In analoger Weise kann eine Kraftmessvorrichtung mit drei oder vier Hebeln entsprechend gegen Beschädigung geschützt werden, indem auf dem Sicherungsbolzen 65,165 jeweils in jedem Bohrungsabschnitt in den einzelnen durchbohrten Hebeln eine Stützschulter angeordnet ist. Je nach Aufbau und Ausbildung des Materialblocks 1,101 kann es notwendig oder vorteilhaft sein, anstelle eines einzelnen Sicherungsbolzens deren zwei oder mehr einzusetzen. Schematisch ist dies anhand der Figur 3, die zwar ebenfalls nur zwei Hebel aufweist, dargestellt. Der erste Sicherungsbolzen 65 ist wie bereits in den Figuren 1,2 und 5 dargestellt und beschrieben eingebaut. Der zweite Sicherungsbolzen 65' wird von der unteren Seite des Materialblocks 1 in diesen eingeführt und schützt folglich auch den unteren Lenker 3, der in den Ausführungsbeispielen mit einem Sicherungsbolzen von der Schocksicherung nicht umfasst wird. Der zweite Sicherungsbolzen 65' durchdringt bei Vorhandensein weiterer Hebel letztere und stützt diese bei Einwirkung eines Schocks sicher ab. Der zweite Sicherungsbolzen 65' kann im Lenker 3 oder im feststehenden Parallelogrammschenkel 10 verankert sein und jeweils im anderen Teil mit Spiel eingreifen. Ein weiterer Sicherungsbolzen 65 kann analog im oberen Lenker 2 eingesetzt sein (Fig.3).

Bei einer Einhebel-Kraftmessvorrichtung, wie sie in Figur 4 dargestellt ist, durchdringt der Sicherungsbolzen 65 den einzigen Hebel 25 und den oberen und/oder den unteren Lenker 2, 3.

Der Sicherheitsbolzen 165 kann in gleicher Art und Weise ebenfalls in Materialblöcken, wie sie oben zu den Figuren 1 bis 4 beschrieben wurden, eingesetzt werden.

Je nach Ausbildung der Messzelle sind mehrere Sicherungsbolzen 65 oder 165 nötig, um sämtliche Teile zu schützen. Es ist auch möglich, einen Bolzen einzusetzen, der sich über die gesamte Höhe der Messzelle erstreckt und auch den unteren Lenker erfasst.

## Patentansprüche

1. Schocksicherung für eine Kraftmessvorrichtung, insbesondere für eine Waage, umfassend einen Materialblock (1,101) mit einem feststehenden Parallelogrammschenkel (10,110), einem zur Aufnahme der zu messenden Kraft dienenden auslenkbaren Parallelogrammschenkel (11), zwei in der Parallelogrammebene biegeelastischen, die beiden Parallelogrammschenkel (10,110,11) verbindenden Lenkern (2,102,3,103) und wenigstens einem Hebel (18,118,25,125), der über eine Koppel (17) mit dem auslenkbaren Parallelogrammschenkel (11) verbunden ist, **dadurch gekennzeichnet, dass** mindestens ein Sicherungsbolzen (65,165) in einer den Materialblock parallel zur Einleitung einer zu messenden Kraft mindestens teilweise durchdringenden Bohrung (61,161) eingesetzt, mit einem der Teile ( 10,110,11,2,102,3,103,18,118,25,125) des Materialblocks (1,101) spielfrei verbunden ist und bezüglich der übrigen durchdrungenen Teile ein radiales Spiel aufweist.

2. Schocksicherung nach Anspruch 1, **dadurch gekennzeichnet, dass** wenigstens ein Sicherungsbolzen (65,165) in einer mindestens einen der Lenker (2,102,3,103) und einen Hebel (18,118) durchdringenden Bohrung (61,161) mit radialem Spiel eingesetzt und mit dem feststehenden Parallelogrammschenkel (10,110) verbunden ist.

3. Schocksicherung nach einem der Ansprüche 1 oder 2, **dadurch gekennzeichnet, dass** der Sicherungsbolzen (65,165) einen Schaft (75,175) umfasst, auf dem mindestens im Bereich der Durchdringung eines Hebels (18,118,25,125) und des Lenkers (2,102) mindestens je eine umlaufende Schulter (83,183,85) ausgebildet ist, deren Aussendurchmesser (D₄,D₅) kleiner ist, als der Durchmesser (D₁) der Bohrung (61,161), und dass am Schaft (75,175) Mittel ausgebildet sind, mit denen der Sicherungsbolzen (65,165) spielfrei mit dem feststehenden Parallelogrammschenkel (10,110) verbindbar ist.

4. Schocksicherung nach Anspruch 3, **dadurch gekennzeichnet, dass** der Sicherungsbolzen (65) in einer Gewindebohrung (67) innerhalb der Bohrung (61) mit einem auf dem Schaft (75) ausgebildeten Gewindeabschnitt (79) gehalten ist und durch Zentriermittel koaxial zur Bohrung (61) zentriert wird.

5. Schocksicherung nach einem der Ansprüche 2 bis 4, **dadurch gekennzeichnet, dass** an die erste Bohrung (61) koaxial eine zweite Bohrung (71) mit kleinerem Durchmesser (D₂) anschliesst und in einer konischen Grundfläche (69) endet und dass das untere Ende des Schaftes (75) eine abgeschrägt oder abgerundet ausgebildete Spitze (81) aufweist.

6. Schocksicherung nach einem der Ansprüche 1 bis 3, **dadurch gekennzeichnet, dass** die Bohrung (161) an einer Stelle (Y) teilweise von einer Querbohrung (162) durchdrungen wird, in welcher ein Querstift (164) eingesetzt ist, dessen Mantel in die Bohrung (161) hineinragt.

7. Schocksicherung nach Anspruch 6, **dadurch gekennzeichnet,**
- **dass** die Bohrung (161) einen durchgehend konstanten Durchmesser (D₁) aufweist,
- **dass** der Sicherungsbolzen (165) einen Schaft (175) mit unterschiedlich ausgebildeten Abschnitten (170,172,174) umfasst, wobei der erste Abschnitt (170) mindestens eine Schulter (183) trägt, deren Durchmesser (D₄) kleiner ist als der Durchmesser (D₅) des zylindrisch ausgebildeten zweiten Abschnitts (172),
- **dass** die Achse (B) des dritten, als Exzenter ausgebildeten Abschnittes (174) radial versetzt zur Achse (A) des Sicherungsbolzens (165) liegt oder dass der dritte Abschnitt (174) einen ovalen oder elliptischen Querschnitt aufweist.

8. Schocksicherung nach Anspruch 7, **dadurch gekennzeichnet, dass** ein vierter zylindrisch ausgebildeter Abschnitt (176) an den dritten Abschnitt (174) anschliesst, dessen Durchmesser gleich ist wie der Durchmesser (D₅) des zweiten Abschnittes (172).

9. Schocksicherung nach einem der Ansprüche 7 oder 8, **dadurch gekennzeichnet, dass** am dritten und vierten Abschnitt (174,176) eine Abplattung (178) ausgebildet ist.

10. Schocksicherung nach Anspruch 6, **dadurch gekennzeichnet,**
- **dass** die Bohrung (161) einen durchgehend konstanten Durchmesser (D₁) aufweist,
- **dass** der Sicherungsbolzen (165) einen Schaft (175) mit unterschiedlich ausgebildeten Abschnitten (170,172) umfasst, wobei der erste Abschnitt (170) mindestens eine Schulter (183) trägt, deren Durchmesser (D₄) kleiner ist als der Durchmesser (D₅) des zylindrisch ausgebildeten zweiten Abschnittes (172)
- **dass** der Querstift (164) in der Querbohrung (162) im Kreuzungsbereich mit dem Sicherungsbolzen (165) einen exzentrisch angeordneten Abschnitt aufweist.

11. Schocksicherung nach einem der Ansprüche 1 bis 10, **dadurch gekennzeichnet, dass** ein erster Sicherungsbolzen (65,165) von oben und dass ein weiterer Sicherungsbolzen (65') von unten in den Materialblock (1,101) hineinragen.

12. Schocksicherung nach einem der Ansprüche 1 bis 10, **dadurch gekennzeichnet, dass** der Sicherungsbolzen (65,165) sich über die gesamte Höhe des Materialblocks (1,101) erstreckt.

13. Schocksicherung nach einem der Ansprüche 1 oder 6, **dadurch gekennzeichnet, dass** für jeweils einen Hebel (18,118,25,125) und einen Lenker (2,102,3,103) ein separater, im feststehenden Parallelogrammschenkel (10,110) verankerter Sicherheitsbolzen (65,165) eingesetzt ist.

14. Schocksicherung nach einem der Ansprüche 1 oder 6, **dadurch gekennzeichnet, dass** je ein den Lenker (2,102) und/oder den Lenker (3,103) durchdringender Sicherheitsbolzen (65') in den feststehenden Parallelogrammschenkel hineinragt.

## Claims

1. A shock protection device for a force measuring apparatus, especially for a balance, comprising a block of material (1, 101) with a stationary parallelogram side member (10, 110), a deflectable parallelogram side member (11) which serves to receive a force to be measured, two guide members (2, 102, 3, 103) connecting the two parallelogram side members (10, 110, 11), said guide members being flexible in the plane of the parallelogram, and at least one lever (18, 118, 25, 125) which is connected by a coupling member (17) to the deflectable parallelogram side member (11), **characterized in that** at least one safety bolt (65, 165) is inserted into a bore (61, 161) passing at least partially through the block of material in parallel to the direction of introduction of a force to be measured, is connected to one of the parts (10, 110, 11, 2, 102, 3, 103, 18, 118, 25, 125) of the block of material (1, 101) without any play and has a radial play relative to the other parts through which it passes.

2. A shock protection device according to claim 1, **characterized in that** at least one safety bolt (65, 165) is inserted into a bore (61, 161) which passes through at least one of the guide members (2, 102, 3, 103) and a lever (18, 118) with a radial play and is connected to the stationary parallelogram side member (10, 110).

3. A shock protection device according to one of claims 1 or 2, **characterized in that** the safety bolt (65, 165) comprises a shaft (75, 175) with at least one circumferential shoulder (83, 183, 85) being provided on the shaft at least in the area where it passes through a lever (18, 118, 25, 125) and the guide member (2, 102), the outside diameter (D₄, D₅) of said shoulder being smaller than the diameter (D₁) of the bore (61, 161), and means are provided on the shaft (75, 175) with which the safety bolt (65, 165) can be connected to the stationary parallelogram side member (10, 110) without any play.

4. A shock protection device according to claim 3, **characterized in that** the safety bolt (65) is secured in a threaded bore (67) within the bore (61) with a threaded section (79) designed on the shaft (75) and is centered coaxially with the bore (61) by centering means.

5. A shock protection device according to one of claims 2 through 4, **characterized in that** a second bore (71) with a smaller diameter (D₂) is connected coaxially to the first bore (61) and ends in a conical bottom surface (69), and the bottom end of the shaft (75) has a beveled or rounded tip (81).

6. A shock protection device according to one of claims 1 through 3, **characterized in that** a transverse bore (162) partially passes through the bore (161) at a point (Y) and a transverse pin (164) is inserted into this transverse bore and its cylindrical surface projects into the bore (161).

7. A shock protection device according to claim 6, **characterized in that**
- the bore (161) has a continuously constant diameter (D₁),
- the safety bolt (165) comprises a shaft (175) with sections (170, 172, 174) of different designs, the first section (170) having at least one shoulder (183), its diameter (D₄) being smaller than the diameter (D₅) of the second section (172) which is cylindrical in shape,
- the axis (B) of the third section (174), which has an eccentric configuration, is offset radially relative to the axis (A) of the safety bolt (165), or the third section (174) has an oval or elliptical cross section.

8. A shock protection device according to claim 7, **characterized in that** a fourth section (176) designed to be cylindrical is connected to the third section (174) whose diameter is the same as the diameter (D₅) of the second section (172).

9. A shock protection device according to one of claims 7 or 8, **characterized in that** a flattened surface (178) is formed on the third and fourth sections (174, 176).

10. A shock protection device according to claim 6, **characterized in that**
- the bore (161) has a continuously constant diameter (D₁),
- the safety bolt (165) comprises a shaft (175) with sections (170, 172) with different designs, the first section (170) having at least one shoulder (183) whose diameter (D₄) is smaller than the diameter (D₅) of the second section (172) which is designed to be cylindrical,
- the transverse pin (164) in the transverse bore (162) has an eccentrically arranged section in the area of intersection with the safety bolt (165).

11. A shock protection device according to one of claims 1 through 10, **characterized in that** a first safety bolt (65, 165) projects from above into the block of material (1, 101) an another safety bolt (65') projects into the block from the bottom.

12. A shock protection device according to one of claims 1 through 10, **characterized in that** the safety bolt (65, 165) extends over the entire height of the block of material (1, 101).

13. A shock protection device according to one of claims 1 or 6, **characterized in that** a separate safety bolt (65, 165) which is anchored in the stationary parallelogram side member (10, 110) is used for each lever (18, 118, 25, 125) and guide member (2, 102, 3, 103).

14. A shock protection device according to one of claims 1 or 6, **characterized in that** one safety bolt (65') passing through the guide member (2, 102) and/or the guide member (3, 103) projects each into the stationary parallelogram side member.

## Revendications

1. Protection anti-choc pour un dispositif de mesure, en particulier pour une balance, comprenant un bloc de matière (1, 101), avec un parallélogramme latéral fixe (10, 110), un parallélogramme latéral orientable (11) destiné à recevoir la force à mesurer, deux guides (2, 102, 3, 103) souples et élastiques dans le plan des parallélogrammes reliant les deux parallélogrammes latéraux (10, 110, 11) et au moins un levier (18, 118, 25, 125), qui est relié par un accouplement (17) au parallélogramme latéral orientable (11), **caractérisée en ce qu'**au moins un goujon de sécurité (65, 165) est inséré dans un alésage (61, 161) traversant au moins partiellement le bloc de matière parallèlement à l'introduction d'une force à mesurer, relié sans jeu à une des pièces (10, 110, 11, 2, 102, 3, 103, 18, 118, 25, 125) du bloc de matière (1, 10) et présente, par rapport aux autres pièces traversées, un jeu radial.

2. Protection anti-choc selon la revendication 1, **caractérisée en ce qu'**au moins un goujon de sécurité (65, 165) est inséré dans un alésage (61, 161) traversant au moins un des guides (2, 102, 3, 103) et/ou un levier (18, 118) avec un jeu radial et est relié au parallélogramme latéral fixe (10, 110).

3. Protection anti-choc selon une des revendications 1 ou 2, **caractérisée en ce que** le goujon de sécurité (65, 165) comprend une tige (75, 175) sur laquelle, au moins dans la zone traversant un levier (18, 118, 25, 125) et le guide (2, 102), au moins un épaulement périphérique (83, 183, 85) respectif est prévu, dont le diamètre extérieur (D4, D5) et inférieur au diamètre (D1) de l'alésage (61, 161) et que, sur la tige (75, 175), sont prévus des moyens grâce auxquels le goujon de sécurité (65, 165) peut être relié sans jeu au parallélogramme latéral fixe (10, 110).

4. Protection anti-choc selon la revendication 3, **caractérisée en ce que** le goujon de sécurité (65) est maintenu dans un alésage fileté (67) à l'intérieur de l'alésage (61) avec une section filetée (79) prévue sur la tige (75) et est centré de manière coaxiale par rapport à l'alésage (61) par des moyens de centrage.

5. Protection anti-choc selon une des revendications 2 à 4, **caractérisée en ce qu'**au premier alésage (61), dans le sens coaxial, s'ajoute un deuxième alésage (71) de diamètre inférieur (D2) qui se termine en une surface de base conique (69) et que l'extrémité inférieure de la tige (75) présente une pointe biseautée ou arrondie (81).

6. Protection anti-choc selon une des revendications 1 à 3, **caractérisée en ce que** l'alésage (161) est traversé partiellement, à un emplacement (Y), par un alésage transversal (162) dans lequel est inséré une goupille transversale (164), dont la surface circonférencielle pénètre dans l'alésage (161).

7. Protection anti-choc selon la revendication 6, **caractérisée en ce que**
- l'alésage (161) présente un diamètre (D1) toujours constant,
- le goujon de sécurité (165) comporte une tige (175) avec des sections (170, 172, 174) de configurations différentes, la première section (170) supportant au moins un épaulement (183), dont le diamètre (D4) est inférieur au diamètre (D5) de la deuxième section de forme cylindrique (172),
- l'axe (B) de la troisième section (174) de type excentrique est décalé dans le sens radial par rapport à l'axe (A) du goujon de sécurité (165) ou que la troisième section (174) présente une section transversale ovale ou elliptique.

8. Protection anti-choc selon la revendication 7, **caractérisée en ce qu'**une quatrième section de forme cylindrique (176) se rattache à la troisième section (174), son diamètre étant égal au diamètre (D5) de la deuxième section (172).

9. Protection anti-choc selon une des revendications 7 ou 8, **caractérisée en ce que**, sur la troisième et la quatrième section (174, 176), un replat (178) est prévu.

10. Protection anti-choc selon la revendication 6, **caractérisée en ce que**
- l'alésage (161) présente un diamètre (D1) toujours constant,
- le goujon de sécurité (165) comporte une tige (175) avec des sections de configurations différentes (170, 172), la première section (170) supportant au moins un épaulement (183), dont le diamètre (D4) est inférieur au diamètre (D5) de la deuxième section de forme cylindrique (172),
- que la goupille transversale (164), dans l'alésage transversal (162), dans la zone de croisement avec le goujon de sécurité (165), présente une section excentrée.

11. Protection anti-choc selon une des revendications 1 à 10, **caractérisée en ce qu'**un premier goujon de sécurité (65, 165) pénètre par le haut et qu'un autre goujon de sécurité (65') pénètre par le bas dans le bloc de matière (1, 101).

12. Protection anti-choc selon une des revendications 1 à 10, **caractérisée en ce que** le goujon de sécurité (65, 165) s'étend au delà de la hauteur totale du bloc de matière (1, 101).

13. Protection anti-choc selon une des revendications 1 ou 6, **caractérisée en ce que**, pour respectivement un levier (18, 118, 25, 125) et un guide (2, 102, 3, 103), un goujon de sécurité (65, 165) séparé, ancré dans le parallélogramme latéral fixe (10, 110) est utilisé.

14. Protection anti-choc selon une des revendications 1 ou 6, **caractérisée en ce que** un goujon de sécurité (65') traversant respectivement le guide (2, 102) et/ou le guide (3, 103) pénètre chacun dans le parallélogramme latéral fixe.
